# EUROPEAN PATENT APPLICATION

(11) **EP 1 345 431 A2**
(43) Date of publication of application: **17.09.2003**
(21) Application number: 02028424.6
(22) Date of filing: 18.12.2002
(51) Int. Cl.: H04N 5/765

(54) **Recording/reproducing apparatus and exclusive control method**

(30) Priority: 29.01.2002 JP 2002020691
(71) Applicant: Kabushiki Kaisha Toshiba, Tokyo (JP)
(72) Inventor: Oka, Hiroyuki, Minato-ku, Tokyo 105-8001 (JP); Hirasawa, Kaoru, Minato-ku, Tokyo 105-8001 (JP)
(74) Representative: Henkel, Feiler, Hänzel

(57) **Abstract**

A CPU (11) receives an instruction to execute an operation, issued by a remote controller via a signal receiving unit (19), and also receives an instruction to execute an operation, issued by a computer via a network interface (20). When exclusive control is executed between the remote controller and the computer, if the operation instructed by the remote controller is rejected, a message that an operation instructed by any other user is being executed is displayed on a display unit (18), thereby informing a user of the remote controller of the fact. On the other hand, if the operation instructed by the computer is rejected, data for informing a user of the computer that an operation instructed by any other user is being executed is transmitted to the computer via the network interface (20).

## Description

The present invention relates to a recording/reproducing apparatus that can be operated by two types of input units, e.g. a remote controller for executing remote control using an infrared signal, and a computer for executing remote control using data communication via a network, and also to an exclusive control method employed in the apparatus. More particularly, the invention relates to a recording/reproducing apparatus capable of executing appropriate exclusive control on the operations of input units of different types, and an exclusive operation control method employed in the apparatus.

Recently, the processing capability of CPUs installed in, for example, personal computers has been enhanced by leaps and bounds. In accordance with this, so-called digital recording/reproducing apparatuses have been developed, which execute highly advanced image processing, in which television programs are received, recorded in, for example, a magnetic disk, using compressing/encoding techniques, and are output on, for example, a monitor using decompressing/decoding techniques.

In digital recording/reproducing apparatuses, it is not necessary to perform troublesome operations, e.g. exchange of tapes. Therefore, it is easy for a number of users, such as a family, to use a single digital apparatus.

Moreover, a simple networking technique such as wireless LAN, which can be easily utilized at home, has now become popular. Accordingly, most information apparatuses, including digital recording/reproducing apparatuses, have a mechanism for enabling the apparatuses to be operated by data communication using the technique.

This mechanism provides users with various methods of use, according to situation. For example, the mechanism enables the users to execute, using a remote controller, remote control of a digital recording/reproducing apparatus when they are in a room in which the apparatus is installed, and also to execute, using a personal computer, remote control of the apparatus when they are in another room.

When the digital recording/reproducing apparatus is operated by remote control, using a remote controller and a personal computer connected via a network, it is important to appropriately execute exclusive control of the controllers. To provide an appropriate user interface, it is preferable to report, for example, an inoperable state of a digital apparatus, resulting from exclusive control, by an appropriate method.

However, no consideration is given to remote control executed by a plurality of input units such as a remote controller and personal computer connected via a network. Accordingly, report of an inoperable state to the users of the remote controller and personal computer by appropriate methods is also not considered at all.

Embodiments of the present invention provide a recording/reproducing apparatus capable of performing appropriate exclusive control on the input operation of different types of input units, and an exclusive control method employed in the apparatus.

According to one aspect of the present invention, there is provided an apparatus which can be remote-controlled, comprising: a display unit which displays various types of information; a communication unit which sends and receives various types of information; and a control unit configured to execute exclusive control of operations instructed by input units, wherein the control unit displays, on the display unit, a message that an instruction cannot be executed, when the control unit has received the instruction issued by a first input unit, during execution of an operation instructed by any other input unit .

According to another aspect of the invention, there is provided an apparatus comprising: a display unit which displays various types of information; a communication unit which sends and receives various types of information; and a control unit configured to execute exclusive control of operations instructed by input units, wherein the control unit displays, on the display unit, to a first input unit a message that an operation instructed by any other input unit is executed.

According to another aspect of the invention, there is provided a method for use in an apparatus which can be remote-controlled, the apparatus including a display unit which displays various types of information, and a communication unit which sends and receives various types of information, comprising: displaying, on the display unit, a message that an instruction cannot be executed, when the instruction issued by a first input unit is received, during execution of an operation instructed by any other input unit; and transmitting, to a second input unit via the communication unit, information for reporting a message that an instruction cannot be executed, when the instruction issued by the second input unit is received, during execution of an operation instructed by any other input unit.

According to another aspect of the invention, there is provided a method for use in an apparatus which can be remote-controlled, the apparatus including a display unit which displays various types of information, and a communication unit which sends and receives various types of information, comprising: displaying, on the display unit, to a first input unit a message that an operation instructed by any other input unit is executed, when executing the operation instructed by any other input unit; and transmitting, to a second input unit via the communication unit, information for reporting a message that an operation instructed by any other input unit is executed, when executing the operation instructed by any other input unit.

In the apparatus of the invention, when, for example, exclusive control is executed on an operation instructed by a user through a remote controller or personal computer, a message can be appropriately reported to the user. Specifically, when a message that an operation instructed by a user of the remote controller is unacceptable is reported to the user, the message is displayed on the display of the recording/reproducing apparatus. On the other hand, when a message that an operation instructed by a user of the personal computer is unacceptable is reported to the user, data for displaying the message on the personal computer is transmitted to the computer.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram illustrating the state of connection in a recording/reproducing apparatus according to a first embodiment of the invention;
FIG. 2 is a block diagram illustrating the configuration of the recording/reproducing apparatus of the first embodiment;
FIG. 3 is a flowchart useful in explaining the procedure of exclusive control employed in the recording/reproducing apparatus of the first embodiment;
FIG. 4 is a flowchart useful in explaining the procedure of exclusive control employed in a recording/reproducing apparatus according to a second embodiment;
FIG. 5 is a flowchart useful in explaining the procedure of exclusive control employed in a recording/reproducing apparatus of a third embodiment; and
FIG. 6 is a flowchart useful in explaining the procedure of exclusive control employed in a recording/reproducing apparatus of a fourth embodiment.

Reference will be made in detail to embodiments of the invention as illustrated in the accompanying drawings.

### (First Embodiment)

A first embodiment of the invention will be described.

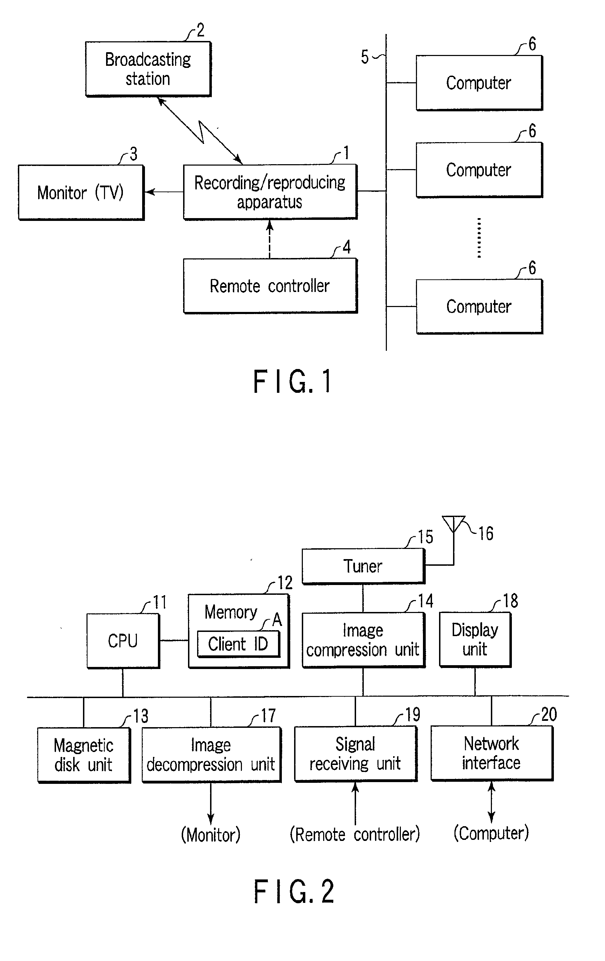

FIG. 1 shows the state of connection in a recording/reproducing apparatus 1 according to the first embodiment.

As seen from FIG. 1, the recording/reproducing apparatus 1 receives and records an image transmitted from a broadcast station 2, and displays the recorded image on a monitor 3 such as a television set. The recording/reproducing apparatus 1 can be operated by remote control using a remote controller 4. The recording/reproducing apparatus 1 can also be operated by remote control using each of the computers 6 connected thereto via a network 5. The network 5 connecting the apparatus 1 to the computers 6 may be a wireless or wired one.

The users of the remote controller 4 can operate it for programming or viewing a recorded image, in a room in which the recording/reproducing apparatus 1 is installed. When a user has instructed, using the remote controller 4, the recording/reproducing apparatus 1 to display a recorded image, the recording/reproducing apparatus 1 executes decompressing/decoding processing on the image compressed and encoded at the time of recording, thereby displaying the resultant image on a monitor 3. The users of the computers 6 can operate it for programming or viewing a recorded image in a room in which the recording/reproducing apparatus 1 is not installed. When a user has instructed, using one computer 6, the recording/reproducing apparatus 1 to display a recorded image on the computer 6, the recording/reproducing apparatus 1 transmits the image compressed and encoded at the time of recording, to the computer 6 via the network 5. The computer 6 decompresses and decodes the received image, and displays the resultant image thereon.

FIG. 2 is a block diagram illustrating the configuration of the recording/reproducing apparatus 1 of the first embodiment.

As seen from FIG. 2, the recording/reproducing apparatus 1 includes a CPU 11, memory 12, magnetic disk unit 13, image compression unit 14, tuner 15, antenna 16, image decompression unit 17, display unit 18, signal receiving unit 19 and network interface unit 20.

The CPU 11 controls the entire recording/reproducing apparatus 1, and operates each unit of the apparatus 1 in accordance with the program stored in the memory 12. The memory 12 is a memory device as the main storage of the recording/reproducing apparatus 1, and stores, for example, the program that specifies the operation procedure of the CPU 11, and data used for the program. Specifically, the memory 12 stores client ID (A) indicating who is operating the recording/reproducing apparatus 1. On the other hand, the magnetic disk unit 13 is an external storage for the recording/reproducing apparatus 1, which is supplementary to the memory 12 and stores a large number of programs and data items.

The image compression unit 14 is an encoder for compressing and encoding the image supplied from the broadcast station 2 and received by the tuner 15 via the antenna 16. The image data processed by the image compression unit 14 is stored in the magnetic disk unit 13. The image decompression unit 17 is a decoder for decompressing and decoding the image data processed by the image compression unit 14 and stored in the magnetic disk unit 13. The image data processed by the image decompression unit 17 is output to the external monitor 3.

The display unit 18 is a device for displaying various types of information such as the operational state of the apparatus 1. The signal receiving unit 19 is a device for receiving an infrared signal as an instruction signal supplied from the remote controller 4.

The network interface unit 20 controls the transmission of data between the apparatus 1 and computers 6 via the network 5. By the data transmission, the apparatus 1 inputs an instruction from each computer 6, and outputs the compressed image data stored in the magnetic disk unit 13.

A description will now be given of exclusive control executed by the recording/reproducing apparatus 1 constructed as the above, between the operation instructed by the remote controller 4, and that instructed by one of the computers 6 via the network 5.

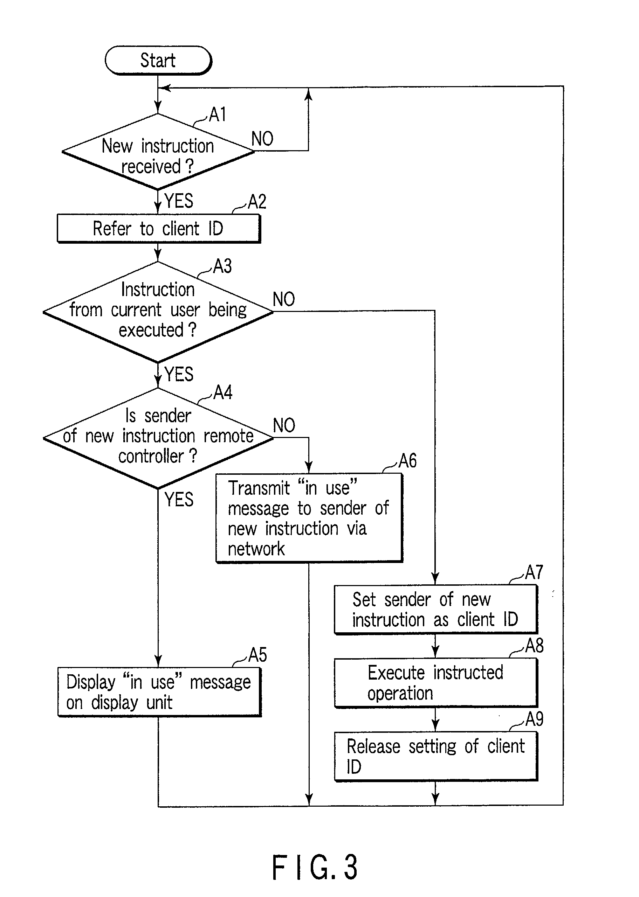

FIG. 3 is a flowchart useful in explaining the procedure of exclusive control employed in the recording/reproducing apparatus of the first embodiment.

When the CPU 11 has received a new instruction to execute an operation (if the answer at step A1 is Yes), it refers to the client ID (A) stored in the memory 12, thereby checking whether there is an instruction from a current user which is now being executed (steps A2 and A3). If an instruction from a current user is being executed (Yes at step A3), the CPU 11 determines whether the new instruction is supplied from the remote controller 4 or the computer 6 (step A4).

If the new instruction is determined to be from the remote controller 4 (Yes at step A4), the CPU 11 displays, on the display unit 18, a message that an instruction from another user is being executed (step A5). On the other hand, if the new instruction is from the computer 6 (No at step A4), the CPU 11 returns data for displaying a message that an instruction from another user is being executed, to the computer 6 via the network interface 20 (step A6).

If, on the other hand, it is determined, from the reference to the client ID (A), that no instruction form a current user is being executed (No at step A3), the CPU 11 changes the client ID (A) stored in the memory 12 so that it indicates that the sender of the new instruction is now using the recording/reproducing apparatus 1 (step A7). After that, the instruction is executed (step A8). After finishing the processing, the CPU 11 changes the client ID (A) stored in the memory 12 so that it indicates that the recording/reproducing apparatus 1 is not used (step A9).

As described above, the recording/reproducing apparatus 1 of the first embodiment provides the following interfacing method according to users. Exclusive control is executed between the remote controller 4 and the computer 6, such that if the operation instructed by the remote controller 4 is rejected, the reason of the rejection is displayed on the display unit 18, while if the operation instructed by the computer 6 is rejected, the reason of the rejection is reported to the computer via the network 5. Furthermore, if the operation instructed by the computer 6 is rejected, the reason for the rejection is not displayed on the display unit 18, which prevents a user of the remote controller 4 from being informed of unnecessary information.

### (Second Embodiment)

A second embodiment of the invention will be described.

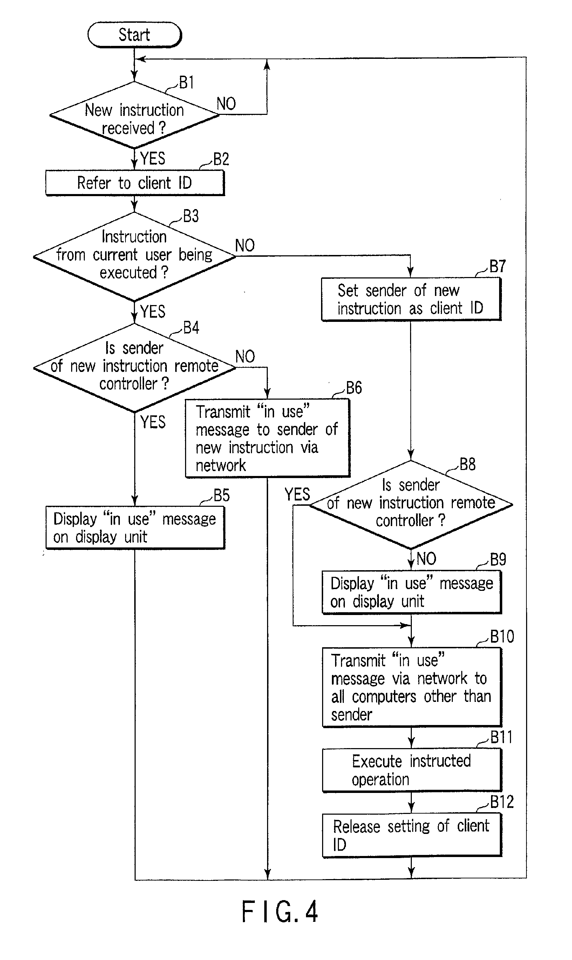

An information processing apparatus according to the second embodiment differs from the information processing apparatus according to the first embodiment in that in the former, when the operation instructed by a user through the remote controller 4 or each computer 6 is executed, it is reported to another user. In other words, in the first embodiment, if an instruction to do an operation is received during the process of another operation, rejection of the instruction is reported. On the other hand, in the second embodiment, upon receiving an instruction to execute an operation issued by a user, the reception of the instruction is reported to another user irrespective of whether the instruction is allowable. FIG. 4 is a flowchart useful in explaining the procedure of exclusive control employed in a recording/reproducing apparatus according to the second embodiment.

Upon receiving an new instruction to execute an operation, issued by a user (Yes at step B1), the CPU 11 refers to the client ID (A) stored in the memory 12, thereby checking whether there is an instruction from a current user, which is now being executed (steps B2 and B3). If an instruction from a current user is being executed (Yes at step B3), the CPU 11 determines whether the new instruction is supplied from the remote controller 4 or the computers 6 (step B4).

If the new instruction is determined to be from the remote controller 4 (Yes at step B4), the CPU 11 displays, on the display unit 18, a message that an instruction from another user is being executed (step B5). On the other hand, if the new instruction is from the computer 6 (No at step B4), the CPU 11 returns data for displaying a message that an instruction from another user is being executed, to the computer 6 via the network interface 20 (step B6).

If, on the other hand, it is determined, from the reference to the client ID (A), that no instruction from a current user is being executed (No at step B3), the CPU 11 changes the client ID (A) stored in the memory 12 so that it indicates that the sender of the new instruction is now using the recording/reproducing apparatus 1 (step B7). If the sender of the new instruction is not the remote controller 4 (No at step B8), a message that the instruction issued from another user is being executed is displayed on the display unit 18 (step B9). At the same time, the CPU 11 transmits data for displaying a message that the instruction issued from the present user is being executed, to all other computers 6 via the network 5 (step B10). After that, the CPU 11 executes the instruction (step B11). After finishing the processing, the CPU 11 changes the client ID (A) stored in the memory 12 so that it indicates that the recording/reproducing apparatus 1 is not used (step B12).

As described above, the recording/reproducing apparatus 1 of the second embodiment positively informs users, in an appropriate manner, that the operation instructed by a user other than the informed users is now being executed.

### (Third Embodiment)

A third embodiment will be described.

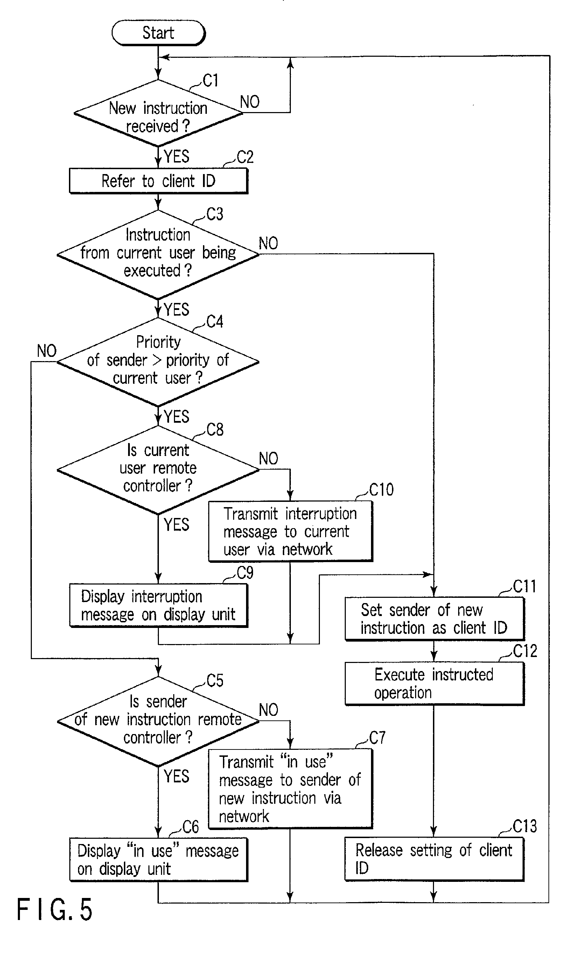

An information processing apparatus according to the third embodiment differs from the information processing apparatus according to the first embodiment in that in the former, the priority order of the input devices (i.e., the remote controller 4 and computers 6) is preset, whereby exclusive control is executed in light of the priority order, and the result of exclusive control is reported to the users of the input devices in an appropriate manner. The CPU 11 sets the priority order on the basis of an instruction from each of the remote controller 4 and computers 6. The contents of the instruction are stored in the memory 12 or magnetic disk unit 13. FIG. 5 is a flowchart useful in explaining the procedure of exclusive control employed in a recording/reproducing apparatus according to the third embodiment.

Upon receiving a new instruction to execute an operation, issued by a user (Yes at step C1), the CPU 11 refers to the client ID (A) stored in the memory 12, thereby checking whether there is an instruction from a current user, which is now being executed (steps C2 and C3). If an instruction from a current user is being executed (Yes at step C3), the CPU 11 compares the priority of the sender of the new instruction with the current user (step C4). If the priority of the current user is higher than that of the sender (No at step C4), the CPU 11 determines whether the new instruction is sent from the remote controller 4 or the computer 6 (step C5). If it is sent from the remote controller 4 (Yes at step C5), a message that the operation instructed by another user is being executed is displayed on the display unit 18 (step C6). On the other hand, if the new instruction is from the computer 6 (No at step C5), the CPU 11 returns data for displaying a message that an instruction from another user is being executed, to the computer 6 via the network interface 20 (step C7).

If, on the other hand, the priority of the sender of the new instruction is higher than the current user (Yes at step C4), the CPU 11 determines whether the current user uses the remote controller 4 or the computer 6 (step C8). If the current user uses the remote controller 4 (Yes at step C8), a message that an interruption has occurred is displayed on the display unit 18 (step C9). If the current user uses the computer 6 (No at step C8), data for displaying a message that an interruption has occurred is transmitted to the computer 6 via the network interface 20 (step C10).

Thereafter, or when it is determined, from the reference to the client ID (A), that no instruction from a current user is being executed (No at step C3), the CPU 11 changes the client ID (A) stored in the memory 12 so that it indicates that the sender of the new instruction is now using the recording/reproducing apparatus 1 (step C11). After that, the instructed operation is executed (step C12). After finishing the processing, the CPU 11 changes the client ID (A) stored in the memory 12 so that it indicates that the recording/reproducing apparatus 1 is not used (step C13).

Thus, the recording/reproducing apparatus 1 of the third embodiment further executes exclusive control in light of the priority order of input devices, and reports the result of exclusive control, including an interruption, to the users in an appropriate manner.

### (Fourth Embodiment)

A fourth embodiment of the invention will be described.

An information processing apparatus according to the fourth embodiment differs from the information processing apparatus according to the first embodiment in that in the former, all the operations are not subjected to exclusive control, but the operations to be subjected to exclusive control are examined more specifically. In other words, although in the first embodiment, when a certain operation is being executed, all the other operations are rejected irrespective of their contents. On the other hand, in the fourth embodiment, there are two or more operations, it is determined, on the basis of their contents, whether or not they should be subjected to exclusive control.

For example, when a user is viewing image data stored in the magnetic disk unit 13, if another user tries to view image data also stored in the magnetic disk unit 13, these two operations should be both accepted, since there is no problem in processing the operations in parallel. The same can be said of a case where when a user is storing, into the magnetic disk unit 13, image data received via the tuner 15, another user tries to view image data stored in the magnetic disk unit 13, or the opposite case where when a user is viewing image data stored in the magnetic disk unit 13, another user tries to store, into the magnetic disk unit 13, image data received via the tuner 15.

On the other hand, when two or more users simultaneously try to store, into the magnetic disk unit 13, image data received via the tuner 15, these operations should be subjected to exclusive control, since the tuner 15 cannot be simultaneously used by two or more users and hence the operations cannot be executed in parallel.

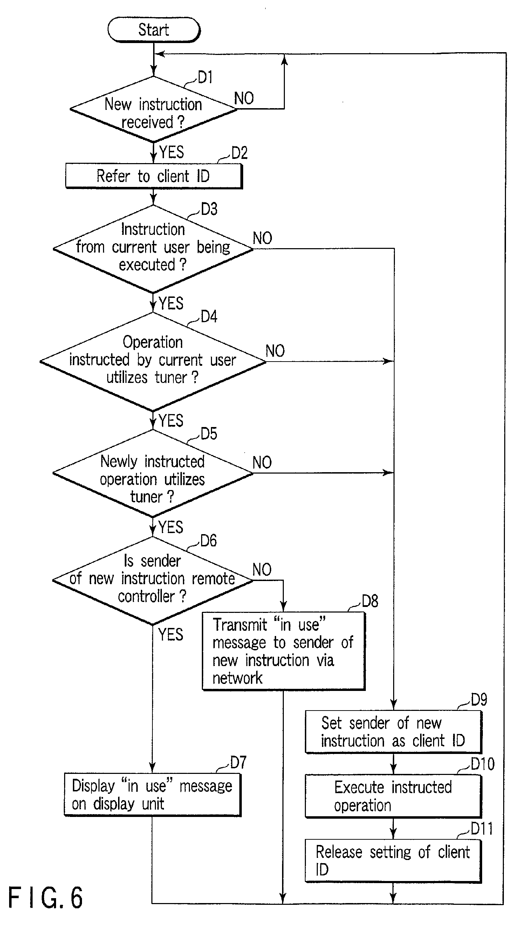

In light of the above, in the fourth embodiment, only the operations that use the tuner 15 are subjected to exclusive control, and the other combinations of operations are simultaneously accepted. FIG. 6 is a flowchart useful in explaining the procedure of exclusive control employed in a recording/reproducing apparatus of the fourth embodiment.

Upon receiving an new instruction to execute an operation, issued by a user (Yes at step D1), the CPU 11 refers to the client ID (A) stored in the memory 12, thereby checking whether there is an instruction from a current user, which is now being executed (steps D2 and D3). If an instruction from current user is being executed (Yes at step D3), the CPU 11 first determines whether the operation instructed by current user utilizes the tuner 15 (step D4). If the tuner 15 is utilized (Yes at step D4), the CPU 11 then determines whether the new instruction to execute an operation requires the tuner 15 (step D5).

If the tuner 15 is also utilized (Yes at step D5), the CPU 11 determines whether the new instruction is sent from the remote controller 4 or the computer 6 (step D6). If it is sent from the remote controller 4 (Yes at step D6), the CPU 11 displays, on the display unit 18, a message that an instruction from another user is being executed (step D7). If, on the other hand, it is sent from a computer 6 (No at step D6), the CPU 11 transmits data for displaying the message that an instruction from another user is being executed, to the computer 6 via the network interface 20 (step D8).

If the operations instructed by current user and newly instructed does not utilize the tuner 15 (No at steps D4 and D5), or if it is determined from the client ID (A) stored in the memory 12 that no instruction from current user is not being executed (No at step D3), the CPU 11 changes the client ID (A) such that it indicates the sender of the present new instruction is now using the recording/reproducing apparatus 1 (step D9), thereby executing the instructed operation (step D10). After finishing the operation, the CPU 11 changes the client ID (A) so that it indicates that the recording/reproducing apparatus 1 is not used (step D11).

As described above, the recording/reproducing apparatus 1 of the fourth embodiment executes more delicate exclusive control based on the contents of an operation instructed by each input unit.

## Claims

1. An apparatus which can be remote-controlled comprising:
a display unit (18) which displays various types of information;
a communication unit (20) which sends and receives various types of information; and
controlling means (11) for executing exclusive control of operations instructed by input units,
wherein the controlling means displays, on the display unit, a message that an instruction cannot be executed, when the controlling means has received the instruction issued by a first input unit, during execution of an operation instructed by any other input unit.

2. The apparatus according to claim 1, wherein the controlling means transmits, to a second input unit via the communication unit, information for reporting a message that an instruction cannot be executed, when the controlling means has received the instruction issued by the second input unit, during execution of an operation instructed by any other input unit.

3. The apparatus for recording/reproducing according to claim 2, wherein the controlling means includes:
setting means for setting a priority order of the input unit respectively;
interrupting means for interrupting an execution of the operation instructed by any input unit and start an execution of the operation instructed by any other input unit which has a higher priority than the any input unit; and
reporting means for displaying, on the display unit, to the first input unit a message that an operation is interrupted, or transmit, to the second input unit via the communication unit, information used to report a message that an operation is interrupted, when the operation is interrupted by the interrupting means.

4. An apparatus comprising:
a display unit (18) which displays various types of information;
a communication unit (20) which sends and receives various types of information; and
controlling means (11) for executing exclusive control of operations instructed by input units,
wherein the controlling means displays, on the display unit, to a first input unit a message that an operation instructed by any other input unit is executed.

5. The apparatus according to claim 4, wherein the controlling means transmits, to a second input unit via the communication unit, information for reporting a message that an operation instructed by any other input unit is executed, when executing the operation instructed by any other input unit.

6. The apparatus according to claim 5, wherein the controlling means includes:
setting means for setting a priority order of the input unit respectively;
interrupting means for interrupting, during execution of an operation instructed by any input unit and start an execution of the operation instructed by any other input unit which has a higher priority than the any input unit; and
reporting means for displaying, on the display unit, to the first input unit a message that an operation is interrupted, or transmit, to the second input unit via the communication unit, information used to report a message that an operation is instructed, when the operation is interrupted by the interrupting means.

7. The apparatus for recording/reproducing according to claim any of claims 3 to 6, wherein the controlling means subjects operations or only operations to exclusive control, the operations utilizing a tuner which selects one of a plurality of channels and receives an image.

8. A method for use in an apparatus which can be remote-controlled, the apparatus including a display unit which displays various types of information, and a communication unit which sends and receives various types of information, said method comprising:
a step (A5) of displaying, on the display unit, a message that an instruction cannot be executed, when the instruction issued by a first input unit is received, during execution of an operation instructed by any other input unit; and
a step (A6) of transmitting, to a second input unit via the communication unit, information for reporting a message that an instruction cannot be executed, when the instruction issued by the second input unit is received, during execution of an operation instructed by any other input unit.

9. The exclusive control method according to claim 11, further comprising:
a step of setting a priority order of the input unit respectively; a step of interrupting an execution of the operation instructed by any input unit and start an execution of the operation instructed by any other input unit which has a higher priority than the any input unit;
a step (C9) of displaying, on the display unit, to the first input unit a message that an operation is interrupted when the operation is interrupted by the interrupting unit; and
a step (CI0) of transmitting, to the second input unit via the communication unit, information used to report a message that an operation is interrupted, when the operation is interrupted by the interrupting unit.

10. A method for use in an apparatus which can be remote-controlled, the apparatus including a display unit which displays various types of information, and a communication unit which sends and receives various types of information, said method comprising:
a step (B5) of displaying, on the display unit, to a first input unit a message that an operation instructed by any other input unit is executed, when executing the operation instructed by any other input unit; and
a step (B6) of transmitting, to a second input unit via the communication unit, information for reporting a message that an operation instructed by any other input unit is executed, when executing the operation instructed by any other input unit.

11. The exclusive control method according to claim 10, further comprising:
a step of setting a priority order of the input unit respectively; a step of interrupting an execution of the operation instructed by any input unit and start an execution of the operation instructed by any other input unit which has a higher priority than the any input unit;
a step (C9) of displaying, on the display unit, to the first input unit a message that an operation is interrupted when the operation is interrupted by the interrupting unit; and
a step (C10) of transmitting, to the second input unit via the communication unit, information used to report a message that an operation is interrupted, when the operation is interrupted by the interrupting unit.

12. The exclusive control method according to claim 8, 9, 10 or 11, wherein exclusive control is executed on operations utilizing a tuner which selects one of a plurality of channels and receives a desired image.
